# DEMANDE DE BREVET EUROPEEN

(11) **EP 3 505 327 A1**
(43) Date de publication de la demande: **03.07.2019**
(21) Numéro de dépôt: 17306963.4
(22) Date de dépôt: 28.12.2017
(51) Int. Cl.: B29C 64/10, B33Y 10/00, B33Y 80/00, G06K 19/06

(54) **PROCEDE DE FABRICATION D'UN OBJET PAR IMPRESSION 3D ET OBJET 3D CORRESPONDANT**

(71) Demandeur: GEMALTO SA, 92190 Meudon (FR)
(72) Inventeur: APACK, Xavier, 13881 Gemenos Cedex (FR); BENOIT, Alexandre, 13881 Gemenos Cedex (FR); BACHIMON, Emmanuel, 13881 Gemenos Cedex (FR); JACQUES, Cédric, 13881 Gemenos Cedex (FR)
(74) Mandataire: Grevin, Emmanuel

(57) **Abrégé**

L'invention concerne un procédé de fabrication d'un objet par impression 3D consistant à inclure à l'intérieur de l'objet (10) pendant sa fabrication des symboles 3D (11) dont la vision en 2D réalisée par un lecteur (13) positionné perpendiculairement à leurs axes de révolution verticaux (14) est identique pour chaque symbole, quelle que soit la position de ce lecteur autour de l'axe de révolution vertical de ce symbole, les axes de révolution des symboles étant parallèles entre eux.

## Description

Le domaine de l'invention est celui de la fabrication d'objets en trois-dimensions, également connus sous le nom d'objets 3D.

Il existe depuis de nombreuses années des imprimantes 3D capables de réaliser en peu de temps des objets 3D. L'impression 3D ou encore impression tridimensionnelle consiste à fabriquer des objets en volume par ajout ou agglomération de matière. L'impression 3D permet de réaliser un objet réel : un concepteur dessine l'objet 3D grâce à un outil de conception assistée par ordinateur (CAO). Le fichier 3D obtenu est traité par un logiciel spécifique qui organise le découpage en tranches des différentes couches nécessaires à la réalisation de l'objet. Le découpage est envoyé à l'imprimante qui dépose ou solidifie la matière couche par couche jusqu'à obtenir l'objet final.

Les matières utilisées pour la création de ces objets peuvent être le plastique (de l'ABS), de la cire, du métal (aluminium, acier, titane, platine), de la céramique ou même du verre.

Il est également connu, par exemple par la vidéo à l'adresse « https://gizmodo.com/microsoft-has-invented-a-way-to-embed-data-in-3d-printe-922028963 », de coder des informations (qui seront dans le cadre de la présente invention appelés des symboles) à l'intérieur d'objets 3D. Ces symboles permettent de vérifier par exemple l'authenticité de l'objet 3D (afin d'éviter des piratages) ou de vérifier que ces objets 3D font bien partie d'un même lot.

Cependant, cette technique nécessite de positionner précisément l'objet 3D par rapport à un lecteur qui lit des signaux réfléchis par les différents symboles. La position de l'objet 3D par rapport au lecteur ne peut être quelconque.

De plus, les symboles qui sont contenus dans l'objet 3D n'y sont insérés qu'après la fabrication de l'objet 3D.

La présente invention propose une solution à ces inconvénients.

Plus précisément, la présente invention propose un procédé de fabrication d'un objet par impression 3D où les symboles qui y sont inclus sont réalisés pendant la fabrication de cet objet 3D. Afin de ne pas avoir à positionner précisément l'objet 3D par rapport à un lecteur, les symboles 3D sont tels que leur vision en 2D réalisée par le lecteur positionné perpendiculairement à leurs axes de révolution verticaux est identique pour chaque symbole, quelle que soit la position de ce lecteur autour de l'axe de révolution vertical de ce symbole, les axes de révolution des symboles étant parallèles entre eux.

De préférence, les symboles 3D sont alignés sur un même axe de révolution vertical, c'est-à-dire que leurs axes de révolutions sont confondus.

Dans un autre mode de mise en oeuvre, les symboles 3D sont alignés sur des axes de révolution verticaux différents et décalés en hauteur les uns par rapport aux autres.

Avantageusement, l'objet est fabriqué à partir d'un matériau différent que les symboles 3D. Alternativement, les symboles 3D sont constitués par des cavités formées dans un matériau support identique à celui de l'objet 3D.

Par soucis de simplification et afin que les symboles puissent être lus par un simple lecteur de code-barres, les symboles 3D sont constitués par des disques de différentes épaisseurs. L'invention concerne également un objet obtenu par impression 3D obtenu selon ce procédé. L'invention sera mieux comprise à la lecture de la description suivante d'un mode de mise en oeuvre préférentiel de l'invention, donné à titre illustratif et non limitatif, et des dessins annexés, dans lesquels :
- La figure 1 représente un objet 3D comprenant des symboles selon l'invention ;
- Les figures 2A à 2F représentent différents exemples de symboles 3D pouvant être utilisés dans le cadre de la présente invention ;
- La figure 2G est une vue de dessus d'un quelconque des symboles utilisé dans le cadre de la présente invention ;
- La figure 3 représente un cylindre dans lequel des cavités sont formées pour constituer des symboles ;
- La figure 4 représente des symboles décalés disposés sur deux axes de révolution parallèles ;
- La figure 5 représente une vue en 2D de symboles décalés disposés sur deux axes de révolution parallèles.

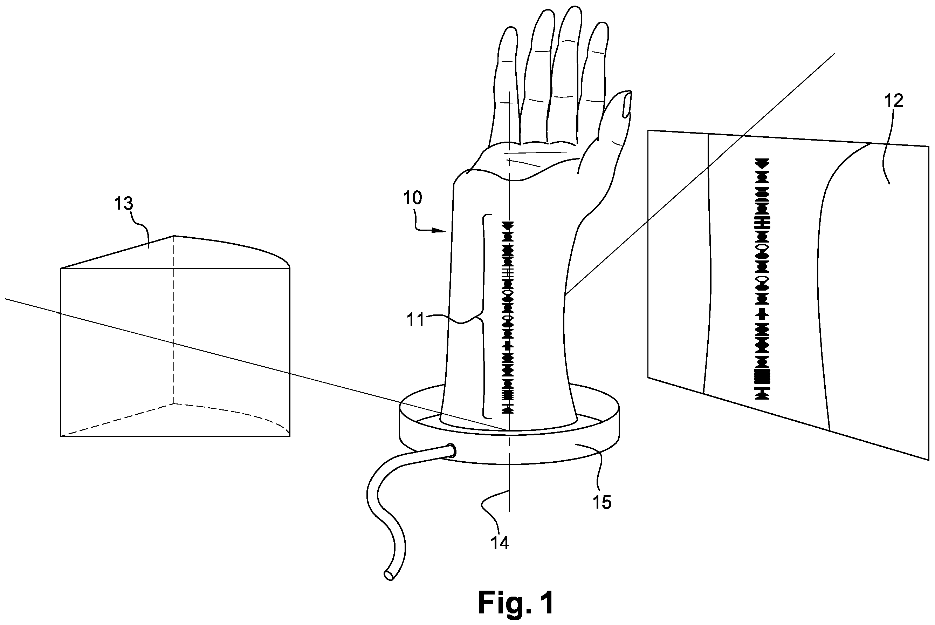

La figure 1 représente un objet 3D comprenant des symboles selon l'invention.

L'objet 3D 10 est ici constitué par une main et une partie d'un avant-bras. L'objet 10 est par exemple en PVC et posé sur un support 15. Il comporte, selon l'invention, des symboles 3D généralement référencés par 11. Ces symboles 11 sont fabriqués pendant la fabrication de l'objet 10 et leur vision en 2D, ici projetée sur un plan 12 et réalisée par un lecteur 13 positionné perpendiculairement à leurs axes de révolution verticaux 14, est identique pour chaque symbole, quelle que soit la position du lecteur 13 autour de l'axe de révolution vertical 14 de ce symbole. A chaque symbole correspond par exemple un nombre ou un code (par exemple un code QR), une référence.

Ici, un axe de révolution 14 unique est représenté, les symboles étant alignés sur ce même axe de révolution.

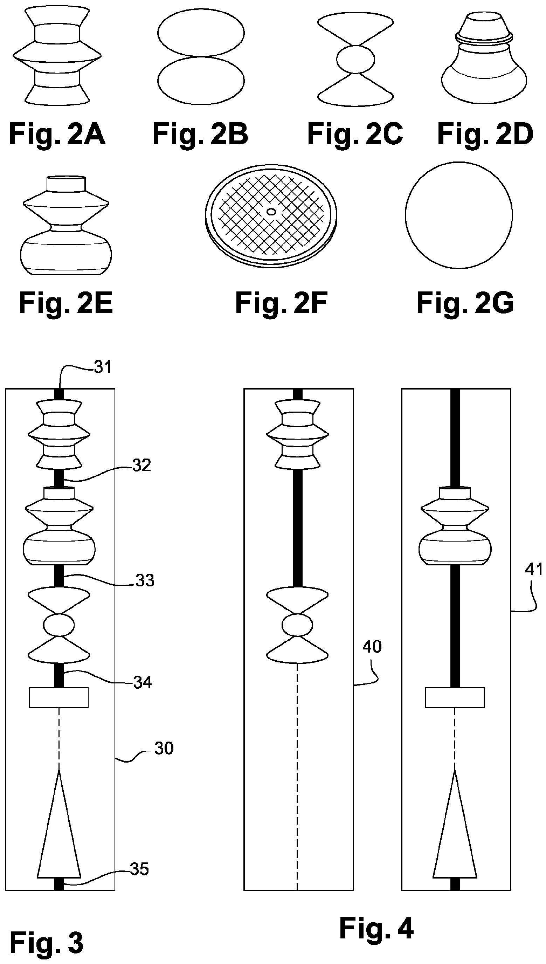

Les figures 2A à 2E représentent différents exemples de symboles 3D pouvant être utilisés dans le cadre de la présente invention.

On constate que chacun de ces symboles est différent lorsqu'il est vu selon un axe perpendiculaire (ou presque perpendiculaire) à son axe de révolution (tracé en pointillés). La lecture (ou projection) de chacun de ces symboles selon un axe perpendiculaire à son axe de révolution permet d'obtenir une image 2D (voir image sur le plan 12 de la figure 1) qui le distingue des autres symboles. En revanche, comme montré sur la figure 2G qui est une vue de dessus ou de dessous d'un quelconque des symboles 2A à 2E, tous les symboles sont parfaitement circulaires (ils peuvent ou non avoir le même diamètre).

Sur la figure 2F est représenté un disque en perspective. L'utilisation exclusive de disques de différentes épaisseurs en tant que symboles permet non seulement de simplifier leur fabrication (il est plus aisé de fabriquer un disque qu'un symbole tel que représenté dans l'une des figures 2A à 2E), mais également de permettre leur lecture par un simple lecteur de code-barres.

Les codes-barres sont en effet constitués de barres noires de différentes épaisseurs espacées par des zones blanches, également de différentes épaisseurs. Le codage d'un objet à l'aide de disques permet donc une lecture facile du code à l'aide d'appareils existants (ce qui n'est pas le cas lorsque des formes plus complexes telles que celles des figures 2A à 2E sont utilisées, car leur représentation en 2D doit être décodée à l'aide d'un décodeur dédié).

La lecture des symboles peut s'effectuer par projection (procédé radiographique) comme montré sur la figure 1 ou par réflexion (procédé échographique tel que dans l'état de la technique mentionné précédemment).

Deux procédés de fabrication des symboles peuvent être utilisés :
A- Les symboles peuvent être des éléments physiques, pleins ou creux ;
B- Les symboles peuvent être des cavités formées dans une masse cylindrique, par exemple dans la masse de l'objet 3D.

Dans le cas A, les symboles sont fabriqués dans un matériau autre que celui de l'objet 10, afin de pouvoir être lus. Les imprimantes 3D sont en effet capables d'utiliser simultanément différents matériaux.

Dans le cas B, on prévoit à l'intérieur de l'objet 10 un cylindre (constitué ou non par le même matériau que l'objet 10) dans lequel des aspérités ou cavités sont formées. Ces aspérités ou cavités ont la même forme que les symboles des figures 2A à 2F.

La figure 3 représente un tel cylindre vu de côté.

On voir ici que les symboles peuvent être soient fait d'une matière de densité différente que le matériau dans lesquels ils sont inclus, soient être définis par les trous de leur forme dans l'objet.

Un cylindre 30 comprend ici une pluralité de symboles formés par impression 3D. Les symboles sont maintenus entre eux par des tenons de liaison 31 à 35 de la même matière que le cylindre 30 (les tenons ne sont pas découpés dans le cylindre 30 lors de la réalisation de celui-ci). Les tenons sont de préférence de faible diamètre.

Comme il sera vu par la suite, en regard de la figure 4, plusieurs cylindres parallèles peuvent être prévus.

En regard de la figure 4, deux cylindres 40 et 41 sont prévus à la place du cylindre de la figure 3. Ces cylindres comportent des cavités décalées en hauteur de sorte que les symboles ne se recouvrent pas lorsqu'ils sont lus par un lecteur 2D. Ici aussi, des tenons sont prévus pour solidariser les symboles entre eux, mais il est également possible de les solidariser par le matériau formant l'objet 3D 10 en ne formant que des cavités à l'emplacement des symboles, à l'instar de fabriquer des objets réels.

Les cylindres 40 et 41 doivent être inclus dans l'objet 3D avec des axes de révolution verticaux parallèles.

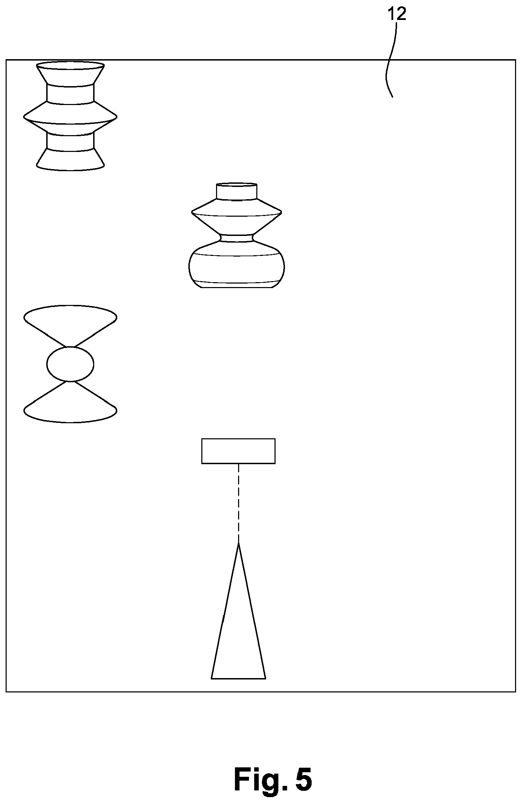

Il est également possible d'utiliser des symboles ne formant pas des cavités (tels que ceux représentés aux figures 2A à 2F) placés sur des axes de révolution différents, mais parallèles entre eux, les symboles étant décalés entre eux de sorte qu'il n'y ait pas de recouvrement des symboles (une imagerie 2D des symboles sera la même, sauf que les symboles seront potentiellement décalés latéralement les uns par rapport aux autres, tel que représenté sur la figure 5 qui représente le plan 12 de la figure 1 avec des symboles décalés latéralement). Un logiciel de reconstruction d'image peut alors réaligner les symboles pour correctement lire ces symboles.

Il en va de même lorsque ces symboles sont constitués par des disques, tel que celui représenté à la figure 2F (réalignement des disques et lecture par un lecteur de codes-barres).

Un symbole particulier, par exemple un cône, peut être utilisé pour indiquer le sens de lecture des symboles. Ce symbole sera placé à l'une des extrémités des symboles (en tout début ou tout à la fin). Ceci permet notamment de pouvoir lire aisément les symboles, même si l'objet est retourné de 180°.

Les symboles, lorsqu'ils sont réalisés dans un matériau autre que celui de l'objet 10, peuvent avantageusement être détruits après lecture, par exemple par chauffage ou à l'aide de rayons, sans endommager l'objet 10.

L'invention consiste également en un objet obtenu selon le procédé selon l'invention.

Un des principaux avantages de l'invention est qu'elle permet d'aisément coder des objets 3D, à des fins d'authentification par exemple.

## Revendications

1. Procédé de fabrication d'un objet par impression 3D, **caractérisé en ce qu'**il consiste à inclure à l'intérieur dudit objet pendant sa fabrication des symboles 3D dont la vision en 2D réalisée par un lecteur positionné perpendiculairement à leurs axes de révolution verticaux est identique pour chaque symbole, quelle que soit la position de ce lecteur autour de l'axe de révolution vertical de ce symbole, les axes de révolution desdits symboles étant parallèles entre eux.

2. Procédé selon la revendication 1, **caractérisé en ce que** lesdits symboles 3D sont alignés sur un même axe de révolution vertical.

3. Procédé selon la revendication 1, **caractérisé en ce que** lesdits symboles 3D sont alignés sur des axes de révolution verticaux différents et décalés en hauteur les uns par rapport aux autres.

4. Procédé selon l'une des revendications 1 à 3, **caractérisé en ce que** ledit objet est fabriqué à partir d'un matériau différent que lesdits symboles 3D.

5. Procédé selon l'une des revendications 1 à 3, **caractérisé en ce que** lesdits symboles 3D sont constitués par des cavités formées dans un matériau support identique à celui dudit objet 3D.

6. Procédé selon l'une des revendications 1 à 5, **caractérisé en ce que** lesdits symboles 3D sont constitués par des disques de différentes épaisseurs.

7. Objet obtenu par impression 3D, **caractérisé en ce qu'**il est fabriqué selon un procédé selon l'une des revendications 1 à 6.
